# EUROPEAN PATENT SPECIFICATION

(11) **EP 3 593 440 B1**
(45) Date of publication and mention of the grant of the patent: **10.05.2023**
(21) Application number: 17713183.6
(22) Date of filing: 10.03.2017
(51) Int. Cl.: H02K 1/14, H02K 1/27, H02K 1/276

(54) **ARRANGEMENT FOR REDUCING BACK ELECTROMOTIVE FORCE HARMONICS IN ARC-SHAPED INTERIOR PERMANENT MAGNETS SYNCHRONOUS MOTORS**
ANORDNUNG ZUR REDUZIERUNG VON HARMONISCHEN DER GEGENELEKTROMOTORISCHEN KRAFT BEI SYNCHRONMOTOREN MIT BOGENFÖRMIGEN INNEREN PERMANENTMAGNETEN
AGENCEMENT POUR RÉDUIRE DES HARMONIQUES DE FORCE CONTRE-ÉLECTROMOTRICE DANS DES MOTEURS SYNCHRONES À AIMANTS PERMANENTS INTÉRIEURS EN FORME D'ARC

(43) Date of publication of application: 15.01.2020
(73) Proprietor: Arçelik Anonim Sirketi, 34445 Istanbul (TR)
(72) Inventor: CETINTURK, Tugba, 34950 Istanbul (TR); GUNERI, Serhat, 34950 Istanbul (TR); TANC, Gamze, 34950 Istanbul (TR); ERTUGRUL, Yasemin, 34950 Istanbul (TR)
(86) International application number: PCT/EP2017/055670
(87) International publication number: WO 2018/162074

(56) References cited:
- JP-A- 2000 166 135
- JP-A- 2006 230 116
- US-A1- 2016 344 244

## Description

The present invention relates to an arrangement for reducing back electromotive force harmonics in arc-shaped interior permanent magnet synchronous motors.

It is well-known that permanent magnet motors realize rotation by the interaction of the flux generated by the magnets in the rotor and the magnetic field generated by the current in the stator coils. These motors have high efficiency and high torque density (in Nm/kg and Nm/cm³). Further, they are easily controlled at low speeds and have compact structures which make them advantageous for widespread use.

Permanent magnet motors are of two types based on the placement of the magnet on the rotor: surface permanent magnet (SPM) and interior permanent magnet (IPM). In IPM motors, the magnets are embedded into the ferromagnetic material of the rotor. Rotors having this structure are durable and protected against centrifugal forces at high speeds. One disadvantage of IPM motors is their difficulty of manufacture due to the magnets being embedded.

Permanent magnet motors are also categorized based on the waveform of the induced voltage. Motors with induced voltage in the coil having square waveform are called brushless direct current motors (BLDC motors). BLDC motors are driven by square pulse current, same as DC motors with brush. Motors with induced voltage in the coil having sinusoidal waveform are called permanent magnet synchronous motors (PMSM). PMSMs are driven by sinusoidal current and are also referred to as brushless alternating current motors (BLAC motors).

Among others, a prior art publication in the technical field of the invention may be referred to as US2012261424, which discloses a motor comprising a stator and a rotor rotatably arranged inside the stator. The rotor comprises a rotor body, a permanent magnet group provided to the rotor body to generate a magnetic field, and a flux barrier group to interrupt magnetic flux. And at least one of the rotor body, the permanent magnet group and the flux barrier group are asymmetrically formed with respect to a center of poles of the rotor.

Another patent publication relevant in the field is US2004256940, disclosing permanent magnet embedded motor including a rotor which is provided with a plurality of slits and a plurality of permanent magnets embedded into the slits and a stator which is provided with an iron core having a plurality of slots to which a coil is wound and is arranged to face the rotor via a gap. The slit includes a permanent magnet embedded part into which the permanent magnet is embedded in a direction perpendicular to the radial direction of the rotor and an "L"-shaped air gap part integrally provided on both ends of the permanent magnet embedded part. An angle "theta1" for one pole of the rotor and an angle "theta2" of the "L"-shaped air gap part are set to be 0.1<=theta2/theta1<=0.3. Further, a radius "R" of a circumscribed circle of the rotor and a radius "R1" for forming an outer peripheral face of the rotor at a portion of the "L"-shaped air gap part are preferably set to be 0.1<=(R-R1)/R<=0.3. Other examples may be referred to as CN102593984, US7550891 and US6847149.

The present invention, on the other hand, addresses the situation where the stator and rotor lamination design is modified in the manufacture of an IPM motor having a square waveform in order to obtain back electromotive force in sinusoidal waveform. Voltage harmonics causing noise in the peak values of back emf make the control of the motor difficult. For this reason, the amplitudes of these back electromotive force harmonics need to be reduced. JP2006230116A discloses an interior permanent magnet synchronous motor with the features of the preamble part of claim 1.

To this end, the present invention proposes an arrangement to improve the waveform of the voltage induced in the coils of a synchronous motor having interior arc-shaped permanent magnets.

The present invention provides an arrangement for reducing back electromotive force harmonics in arc-shaped interior permanent magnet synchronous motors, as provided by the characterizing features defined in Claim 1.

Primary object of the present invention is to reduce back electromotive force harmonics in arc-shaped interior permanent magnet synchronous motors.

The present invention is an in interior permanent magnet synchronous motor as defined in the independent claim 1. Further embodiments of the invention are defined in the dependent claims 2-4.

Accompanying drawings are given solely for the purpose of exemplifying an interior permanent magnet synchronous motor, whose advantages over prior art were outlined above and will be explained in brief hereinafter.

The drawings are not meant to delimit the scope of protection as identified in the Claims, nor should they be referred to alone in an effort to interpret the scope identified in said Claims without recourse to the technical disclosure in the description of the present invention. The drawings are only exemplary in the sense that they do not necessarily reflect the actual dimensions and relative proportions of the respective components of the system with the exception of specific explanations.

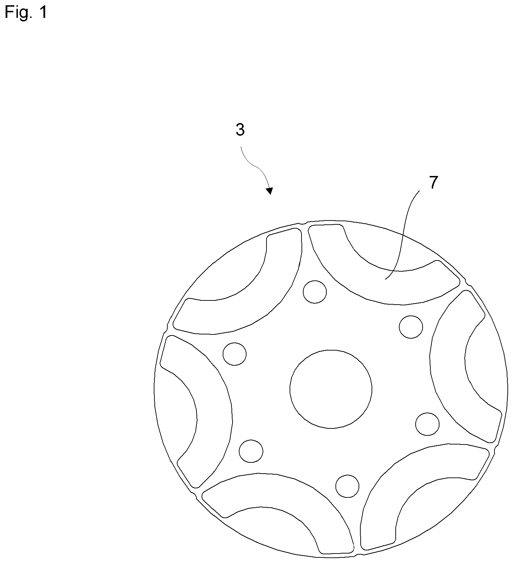

Fig. 1 demonstrates top view of the rotor of an interior permanent magnet synchronous motor according to the present invention.

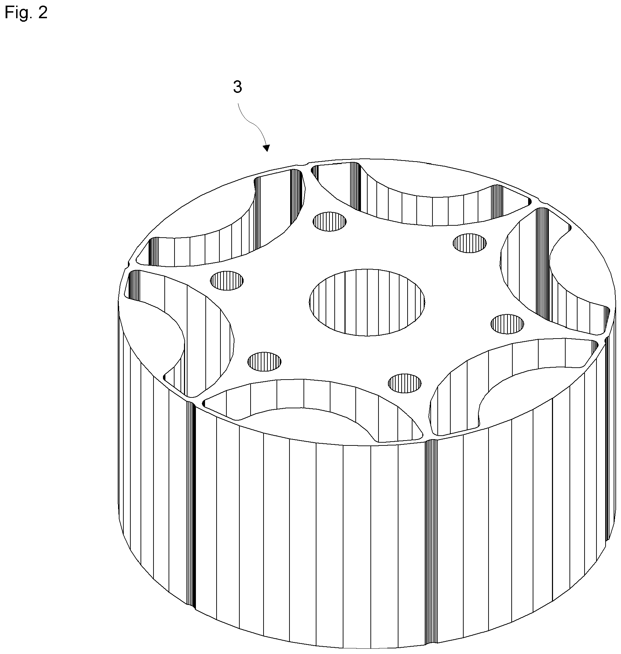

Fig. 2 demonstrates a perspective view of the rotor of the interior permanent magnet synchronous motor according to the present invention.

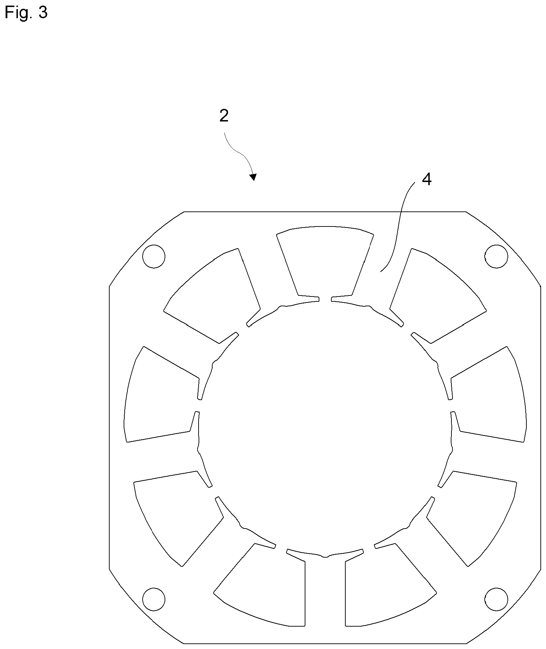

Fig. 3 demonstrates top view of the stator of the interior permanent magnet synchronous motor according to the present invention.

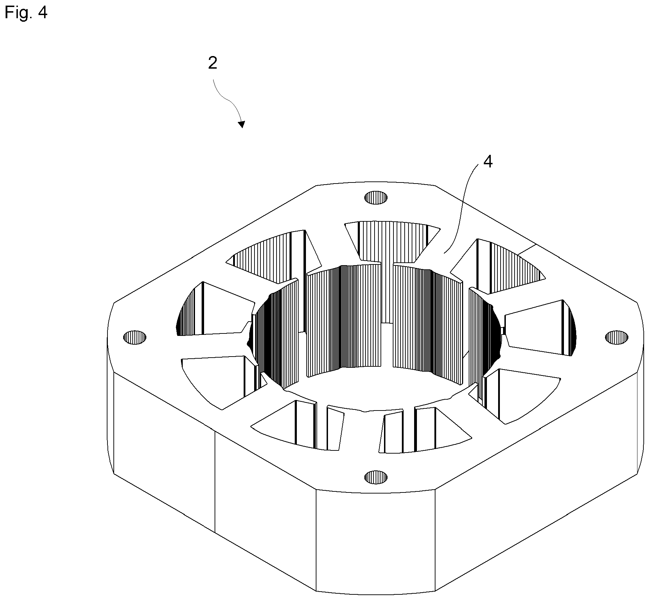

Fig. 4 demonstrates a perspective view of the stator of the interior permanent magnet synchronous motor according to the present invention.

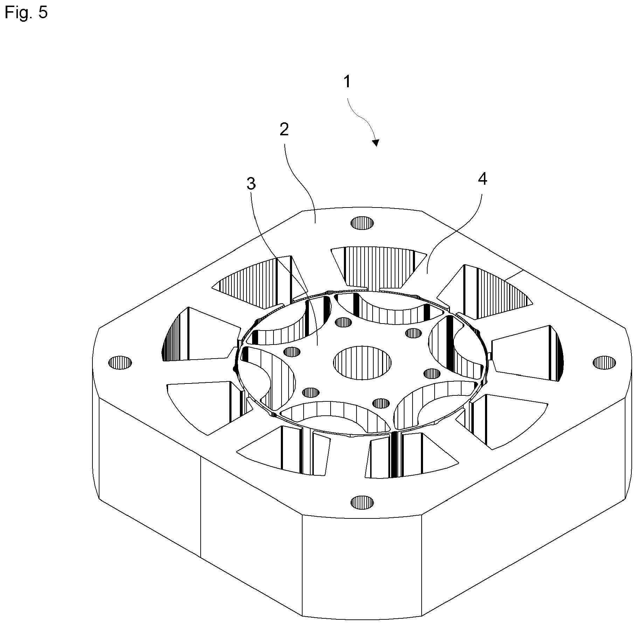

Fig. 5 demonstrates a perspective view of the interior permanent magnet synchronous motor according to the present invention.
Fig. 6 demonstrates top view of stator and rotor cavities of the interior permanent magnet synchronous motor according to the present invention.
Fig. 7 demonstrates a further enlarged view of the stator and rotor cavities of the interior permanent magnet synchronous motor according to the present invention.

The following numerals are assigned to different part number used in the detailed description:
1. Interior permanent magnet synchronous motor
2. Stator assembly
3. Rotor assembly
4. Stator teeth
5. Rotor cavity
6. Stator cavity
7. Arc-shaped permanent magnet
8. Enlarged lateral gap region
9. Central region
10. First radius of curvature
11. Second radius of curvature
12. Flange portion
13. Air gap

The present invention relates to an interior permanent magnet synchronous motor (1) conventionally having a stator assembly (2) with stator teeth (4) carrying stator windings and an internal rotor assembly (3) having embedded arc-shaped permanent magnets (7). The rotor is typically rotatably disposed inside the stator having a cylindrical core with the stator coils installed in the stator core. The invention is devised under the recognition that there exists a need for an arrangement for reducing back electromotive force harmonics in arc-shaped interior permanent magnet synchronous motors (1).

The present invention provides a solution to the aforementioned problem by creating cavities (namely stator cavity (6) and rotor cavity (5)) on the laminations of the stator and rotor assemblies (2 and 3) as will be delineated below. Further, in a conventional manner, a number of sheets of a magnetic material are being laminated, stator teeth (4) are circumferentially constructed at a uniform angular pitch with the slots thereinbetween. Flange portions (i.e. shoe of stator) (12) of the stator teeth (4) extend in opposite circumferential directions.

According to the present invention, cavities on the rotor are positioned at equal distance from the closest part of two neighboring arc-shaped permanent magnets (7). On the other hand, cavities on the lamination of the stator are placed in the middle of the two flange portions (i.e. shoe of stator) (12) of each stator tooth (4) at the internal face thereof. The tooth width is constant all along the tooth.

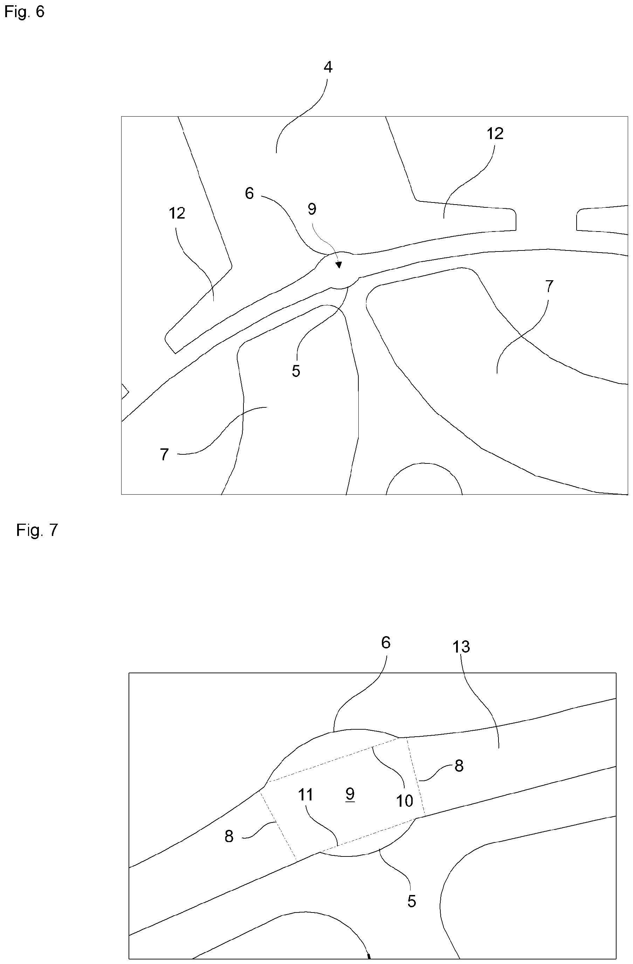

Figures 6 and 7 illustrate enlarged views of the stator and rotor cavities (6, 5). Stator cavities (6) are equidistant from each other. Likewise, rotor cavities (5) are also equidistant from each other. In reference to Fig. 7 now, stator and rotor cavities (6, 5) are arranged such that the stator cavity (6) is associated with a first length in the form of a first radius of curvature (dashed line 10) of the elliptic stator cavity (6) and the rotor cavity (5) is associated with a second length in the form of a second radius of curvature (dashed line 11) of the elliptic rotor cavity (5) wherein said first radius of curvature (10) is greater than said second radius of curvature (11).

The stator and rotor cavities (6, 5), when oppositely aligned, form a central region (9) and the air gap (13) between stator and rotor assemblies (2, 3) comprises enlarged lateral gap region (8) at both sides of said central region (9) gradually narrowing down to a constant in-between dimension in reverse directions from said central region (9).

With the arrangement according to the present invention, the waveform of a motor having square wave back emf and high total harmonic distortion (THD) will be sinusoidal and its THD value will be decreased. Studies conducted on conventional motors and motor relying on the arrangement according to the present invention are found to show decrease of THD from 3.86% to 1.7%. Therefore, the motor can be more easily and efficiently controlled.

In a nutshell, the present invention proposes an interior permanent magnet synchronous motor (1) as defined in claims 1 - 4.

Therefore, the present invention fulfills the task of reducing back electromotive force harmonics in arc-shaped interior permanent magnet synchronous motors thanks to the special arrangement of stator and rotor cavities (6, 5) having particular forms and in combination effecting elimination of harmonics.

## Claims

1. An interior permanent magnet synchronous motor (1) having a stator with a cylindrical core with stator coils installed in the stator core, said motor further having an internal rotor rotatably disposed inside the stator and having embedded arc-shaped permanent magnets (7) wherein the stator core comprises stator teeth (4) having flange portions (12) extending in opposite circumferential directions along an air gap (13) between said stator and rotor, the rotor comprises rotor cavities (5) on outer circumferential portions facing said air gap (13) between said stator and rotor and, the stator teeth (4) comprise stator cavities (6) in the middle of said two flange portions (12) of each stator tooth (4) facing said air gap (13) between said stator and rotor **characterized in that;** the rotor cavities (5) are positioned at equal distance from closest parts of two neighboring arc-shaped permanent magnets (7) on opposite sides, the stator and rotor cavities (6, 5) are arranged such that the stator cavity (6) is associated with a first length in the form of a first radius of curvature (10) of an elliptic cross-section stator cavity (6) and the rotor cavity (5) is associated with a second length in the form of a second radius of curvature (11) of an elliptic cross-section rotor cavity (5) wherein said first radius of curvature (10) is greater than said second radius of curvature (11).

2. An interior permanent magnet synchronous motor (1) as in Claim 1, **characterized in that** stator cavities (6) are equidistant from each other.

3. An interior permanent magnet synchronous motor (1) as in Claim 1 or 2, **characterized in that** rotor cavities (5) are equidistant from each other.

4. An interior permanent magnet synchronous motor (1) as in any preceding Claim, **characterized in that** said stator and rotor cavities (6, 5), when oppositely aligned, form a central region (9) and the air gap (13) between stator and rotor comprises enlarged lateral gap regions (8) at both sides of said central region (9) gradually narrowing down to a constant in-between dimension in reverse directions from said central region (9).

## Patentansprüche

1. Ein Innenpermanentmagnet-Synchronmotor (1) mit einem Stator mit zylindrischem Kern, wobei im Statorkern Statorspulen installiert sind, wobei der Motor ferner einen Innenrotor aufweist, der drehbar innerhalb des Stators angeordnet ist und eingebettete bogenförmige Permanentmagnete (7) aufweist, wobei der Statorkern Statorzähne (4) mit Flanschabschnitten (12) umfasst, die sich in entgegengesetzten Umfangsrichtungen entlang eines Luftspalts (13) zwischen dem Stator und dem Rotor erstrecken, der Rotor Rotorhohlräume (5) an äußeren Umfangsabschnitten umfasst, die dem Luftspalt (13) zwischen dem Stator und dem Rotor zugewandt sind, und die Statorzähne (4) Statorhohlräume (6) in der Mitte der zwei Flanschabschnitte (12) umfassen, wobei jeder Statorzahn (4) dem Luftspalt (13) zwischen dem Stator und dem Rotor zugewandt ist, **gekennzeichnet ist es durch** die Rotorhohlräume (5), die in gleichem Abstand von engsten Teilen zweier benachbarter bogenförmiger Permanentmagnete (7) auf gegenüberliegenden Seiten positioniert sind, die Stator- und Rotorhohlräume (6, 5) derart angeordnet sind, dass dem Statorhohlraum (6) eine erste Länge in Form eines ersten Krümmungsradius (10) eines im Querschnitt elliptischen Statorhohlraums (6) zugeordnet ist und dem Rotorhohlraum (5) eine zweite Länge in Form eines zweiten Krümmungsradius (11) eines Rotorhohlraums (5) mit elliptischem Querschnitt zugeordnet ist, wobei der erste Krümmungsradius (10) größer als der zweite Krümmungsradius (11) ist.

2. Ein Innenpermanentmagnet-Synchronmotor (1), wie in Anspruch 1 aufgeführt, **ist dadurch gekennzeichnet, dass** Statorhohlräume (6) äquidistant voneinander sind.

3. Ein Innenpermanentmagnet-Synchronmotor (1), wie in Anspruch 1 oder 2 aufgeführt, **ist dadurch gekennzeichnet, dass** die Rotorhohlräume (5) äquidistant zueinander sind.

4. Ein Innenpermanentmagnet-Synchronmotor (1), wie in einem der vorherigen Ansprüchen aufgeführt, **ist dadurch gekennzeichnet, dass** die Stator- und Rotorhohlräume (6, 5), wenn sie entgegengesetzt ausgerichtet sind, einen Mittelbereich (9) bilden und der Luftspalt (13) zwischen Stator und Rotor beiderseits des Mittelbereichs (9) vergrößerte seitliche Spaltbereiche (8) aufweist, die sich allmählich auf eine konstante Zwischendimension in umgekehrten Richtungen von dem zentralen Bereich (9) verengen.

## Revendications

1. Un moteur synchrone intérieur à aimants permanents (1) ayant un stator avec un noyau cylindrique avec des bobines de stator installées dans le noyau de stator, ledit moteur ayant en outre un rotor interne disposé de manière rotative à l'intérieur du stator et ayant des aimants permanents encastrés en forme d'arc ( 7), dans lequel le noyau de stator comprend des dents de stator (4) ayant des parties de bride (12) s'étendant dans des directions circonférentielles opposées le long d'un entrefer (13) entre ledit stator et le rotor, le rotor comprend des cavités de rotor (5) sur des parties circonférentielles extérieures faisant face audit espace d'air (13) entre ledit stator et ledit rotor et, les dents de stator (4) comprennent des cavités de stator (6) au milieu desdites deux parties de bride (12) de chaque dent de stator (4) faisant face audit espace d'air (13) entre ledit stator et ledit rotor **caractérisé en ce que;** les cavités de rotor (5) sont positionnées à égale distance des parties les plus proches de deux aimants permanents voisins en forme d'arc (7) sur des côtés opposés, les cavités de stator et de rotor (6, 5) sont disposées de telle sorte que la cavité de stator (6) est associée à une première longueur sous la forme d'un premier rayon de courbure (10) d'une cavité de stator à section transversale elliptique (6) et la cavité de rotor (5) est associée à une seconde longueur sous la forme d'un second rayon de courbure (11) d'une cavité de rotor à section transversale elliptique (5), dans laquelle ledit premier rayon de courbure (10) est supérieur audit second rayon de courbure (11).

2. Un moteur synchrone intérieur à aimants permanents (1) selon la déclaration 1, **caractérisé en ce que** les cavités du stator (6) sont équidistantes les unes des autres.

3. Moteur synchrone intérieur à aimants permanents (1) selon la déclaration 1 ou 2, **caractérisé en ce que** les cavités du rotor (5) sont équidistantes les unes des autres.

4. Un moteur synchrone intérieur à aimant permanent (1) comme dans toute déclaration précédente, **caractérisé en ce que** lesdites cavités de stator et de rotor (6, 5), lorsqu'elles sont alignées de manière opposée, forment une région centrale (9) et l'entrefer (13) entre le stator et le rotor comprend des régions d'entrefer latérales élargies (8) des deux côtés de ladite région centrale (9) se rétrécissant progressivement jusqu'à une dimension intermédiaire constante dans des directions inverses de ladite région centrale (9).
